# EUROPEAN PATENT APPLICATION

(11) **EP 1 959 451 A1**
(43) Date of publication of application: **20.08.2008**
(21) Application number: 08002775.8
(22) Date of filing: 14.02.2008
(51) Int. Cl.: G11B 27/34, G06F 3/048

(54) **User interface providing method for mobile terminal having touch screen**

(30) Priority: 15.02.2007 KR 20070016265
(71) Applicant: Samsung Electronics Co., Ltd, Suwon-si, Gyeonggi-do 443-742 (KR)
(72) Inventor: Lee, Heui Jin Samsung Electronics Co., Ltd., Suwon-si, Gyeonggi-do (KR); Oh, Kyung Ho Samsung Electronics Co., Ltd., Suwon-si, Gyeonggi-do (KR); Beock, Jong Han Samsung Electronics Co., Ltd., Suwon-si, Gyeonggi-do (KR); Kim, Jung Min Samsung Electronics Co., Ltd., Suwon-si, Gyeonggi-do (KR)
(74) Representative: Grünecker, Kinkeldey, Stockmair & Schwanhäusser Anwaltssozietät

(57) **Abstract**

A user interface providing method and apparatus for a mobile terminal is disclosed. A managing area and a touch action area are set on a touch screen. A desired data file in the managing area is dragged and dropped into the touch action area, thereby playing the data file. The user can play a particular data file through simple drag and drop actions. As a result, the user can use a desired function of the mobile terminal in an intuitive manner.

## Description

### Background of the Invention

### Field of the Invention

The present invention relates to a mobile terminal and, more particularly, to a user interface providing method for a mobile terminal having a touch screen.

### Description of the Related Art

Advances in information and communication technologies have enabled popularization of various mobile terminals. In addition to conventional phone call and text message services, advanced mobile terminals support various functions related to multimedia, wireless Internet, wireless short-range communication, mobile broadcast reception, and the like. There also have been great advances in size, design, resolution, and user interface.

For a user-friendly interface, mobile terminals having a touch screen have been developed. A touch screen enables a single display unit to input and display information. The touch screen can perform functions, in part or whole, of a conventional keypad. Replacement of a keypad with a touch screen may result in enlargement of a display area. In addition, the touch screen enables intuitive manipulation of the mobile terminal. However, the touch screen still leaves room for improvement in user convenience.

### Summary of the Invention

The present invention provides a user interface providing method for a mobile terminal wherein an application can be executed on a single screen using a touch screen.

The present invention also provides a user interface providing method for a mobile terminal wherein selection of a file on a single screen results in execution of a corresponding application.

In accordance with an exemplary embodiment of the present invention, there is provided a user interface providing method for a mobile terminal having a touch screen, including: displaying a data file list on the touch screen, selecting, in response to a drag event, a data file in the data file list, detecting events occurring to the selected data file and playing, when a drop event has occurred to the selected data file, the selected data file.

In accordance with another exemplary embodiment of the present invention, there is provided a user interface providing method for a mobile terminal having a touch screen, including displaying a data file list on the touch screen, selecting, in response to a drag event, a data file in the data file list, detecting events occurring to the selected data file and executing, when a drop event has occurred to the selected data file, an application associated with the selected data file.

### Brief Description of the Drawings

The above and other objects, features and advantages of the present invention will be more apparent from the following detailed description in conjunction with the accompanying drawings, in which:
FIG 1 illustrates a configuration of a mobile terminal according to an exemplary embodiment of the present invention;
FIG 2 illustrates a screen layout for a user interface using a touch screen;
FIG 3 is a flow chart illustrating a user interface providing method using a touch screen according to another exemplary embodiment of the present invention;
FIG 4 is a flow chart illustrating an example of the user interface providing method of FIG. 3;
FIGS. 5A to 5D are screen representations for the flow chart in FIG. 4;
FIG 6 is a flow chart illustrating another example of the user interface providing method of FIG. 3; and
FIG 7 is a flow chart illustrating another example of the user interface providing method of FIG 3.

### Detailed Description

Embodiments of the present invention are described in detail with reference to the accompanying drawings. The same reference symbols identify the same or corresponding elements in the drawings. Detailed descriptions of constructions or processes known in the art may be omitted to avoid obscuring the invention in unnecessary detail.

For the purpose of description, a mobile communication terminal is described as an example of a mobile terminal of the present invention. However, the present invention is not limited to a mobile communication terminal. The mobile terminal of the present invention is a terminal having a touch screen, and may be any information and communication appliance or multimedia appliance, such as a mobile communication terminal, digital broadcast receiving terminal, personal digital assistant (PDA), smart phone, international mobile telecommunications 2000 (IMT 2000) terminal, wideband code division multiple access (WCDMA) terminal, and universal mobile telecommunications system (UMTS) terminal.

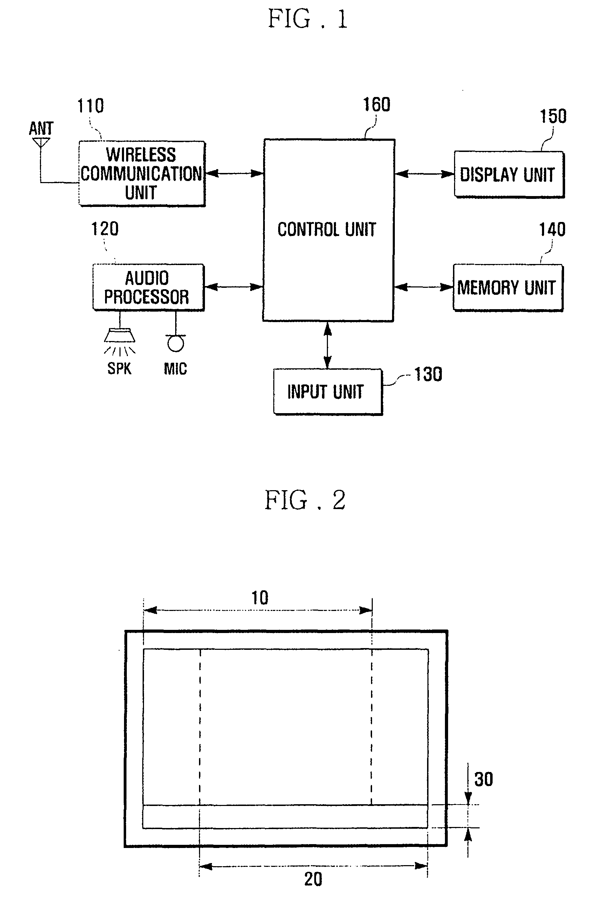

FIG 1 illustrates a configuration of a mobile terminal according to an exemplary embodiment of the present invention.

Referring to FIG. 1, the mobile terminal includes a wireless communication unit 110, audio processor 120, input unit 130, memory unit 140, display unit 150, and control unit 160.

The wireless communication unit 110 performs communication operations to transmit and receive, for example, a message to and from another mobile terminal. The wireless communication unit 110 includes a radio frequency (RF) transmitter for amplifying and up-converting the frequency of a signal to be transmitted and, and an RF receiver for low-noise amplifying a received signal and down-converting the frequency of the signal.

The audio processor 120 reproduces an audio signal from the control unit 160 through a speaker SPK, and sends an audio signal, such as a voice signal, from a microphone MIC to the control unit 160. That is, the audio processor 120 converts an analog voice signal from the microphone MIC into digital data, and sends the digital data to the control unit 160. The audio processor 120 also converts audio or acoustic data from the control unit 160 into an audible analog signal, and sends the audible analog signal to the speaker SPK.

The input unit 130 includes a plurality of alphanumeric and function keys for inputting alphanumeric information and for setting various functions. The function keys may include direction, side, and shortcut keys associated with corresponding functions. The input unit 130 transmits key signals from the user for setting and controlling the mobile terminal to the control unit 160.

The memory unit 140 stores application programs for the present invention, downloaded contents, and user data created by the user. The memory unit 140 can provide a buffer space for temporarily storing user data generated by a running application program such as a text message program. The memory unit 140 may include a program memory section and a data memory section. The program memory section stores an operating system for booting the mobile terminal, and application programs for creating and or processing, text messages, for example, When one of these functions is activated in response to a user request, the mobile terminal executes a corresponding application program under the control of the control unit 160. The data memory section stores user data generating from operation of the mobile terminal, and stores, for example, text messages related to the short message service. The data memory section also stores setting information such as phonebooks for the user.

The display unit 150 displays various menus and setting data of the mobile terminal, information input by the user, and information to be provided to the user.

The display unit 150 may include a panel of liquid crystal display (LCD) devices. In particular, the display unit 150 further includes a touch panel for a touch screen capability. Hence, the display unit 150 can also act as an input means.

The display unit 150 is a touchscreen-enabled unit that generates a voltage or current signal corresponding to a touched location on the touch screen to input a command or graphic information from the user.

The display unit 150 includes a touch panel, LCD panel, and backlight, which are stacked in sequence. The display unit 150 further includes signal lines for relaying signals from the touch panel to the control unit 160, and a tape carrier package connected to a lower substrate of the LCD panel for applying electrical signals to a driver of the LCD panel.

The touch panel includes an upper substrate and a lower substrate, each of which is coated with an indium-tin-oxide (ITO) film having an ITO electrode membrane or with poly-ethylene terephthalate film having an ITO electrode membrane; electrode patterns formed on the ITO electrode membranes; and spacers for maintaining a constant gap between the upper substrate and lower substrate.

A conductive x-axis pattern and y-axis pattern, separated from each other by an insulator, are formed at edges of the ITO electrode membrane. When a finger or stylus touches the upper substrate, the ITO electrode membrane of the upper substrate is brought into contact with that of the lower substrate. Then, a voltage is measured from the x-axis pattern and y-axis pattern, and the coordinates of the touched location are extracted and sent to the control unit 160.

The LCD panel includes liquid crystal cells injected between two glass substrates, and adjusts light transmittance to display images. The amount of light passing through a liquid crystal cell is adjusted according to a corresponding video or pixel signal.

The display unit 150 informs the control unit 160 of occurrences of a drag event or drop event on the touch screen. The display unit 150 senses a voltage or current signal corresponding to the touched location, and sends the coordinates of the touched location at which a drag event or drop event has occurred to the control unit 160.

The drag event corresponds to a touch extending from a start location to an end location on the touch screen. For a drag event, the display unit 150 tracks the extended touch and sends the coordinates thereof to the control unit 160.

The drop event corresponds to the end of a drag event. For a drop event, the display unit 150 sends the coordinates of the end location of a corresponding drag event to the control unit 160.

The control unit 160 controls the overall operation of the mobile terminal and signal exchange between internal elements thereof. That is, the control unit 160 controls signal exchange between the wireless communication unit 110, audio processor 120, input unit 130, memory unit 140, and display unit 150.

In particular, the control unit 160 receives coordinates associated with a drag event and drop event from the display unit 150, and performs an operation according to the received coordinates.

The control unit 160 may include a data processing module for encoding and modulating a signal to be transmitted through the wireless communication unit 110, and for demodulating and decoding a received signal. Thereto, the data processing module may include a modulator/demodulator (modem) and a coder/decoder (codec). The codec includes a data codec for processing packet data, and an audio codec for processing an audio signal such as a voice signal. The data processing module may also be included in the wireless communication unit 110 or be implemented as a separate entity between the wireless communication unit 110 and control unit 160.

FIG 2 illustrates a screen layout for a user interface using a touch screen.

Referring to FIG. 2, the touch screen of the display unit 150 includes a managing area 10 and a touch action area 20. The display screen may further include a soft key area 30, and other areas for icons.

The managing area 10 is used to display lists of data files. The user can select a data file in the managing area 10 through a drag action.

The touch action area 20 is used to execute an application associated with a data file that is selected through a drag action and dropped into the touch action area 20.

The managing area 10 and touch action area 20 can provides an intuitive means for executing one or more applications in a single screen. That is, selection of a data file and execution of a corresponding application are performed in a single screen. In a conventional method, those operations may require a number of screen changes.

The soft key area 30 is used to display an option key, menu key, back key, or end key depending upon usage contexts.

The managing area 10, touch action area 20, and soft key area 30 may vary in size and configuration. That is, these areas may be selectively activated, and be enlarged or reduced, according to operation modes.

The managing area 10 can be divided into a folder zone and a file zone. The folder zone is used to display a list of folders. When a folder in the list is selected, the managing area 10 is expanded and a list of files in the selected folder is displayed in the file zone.

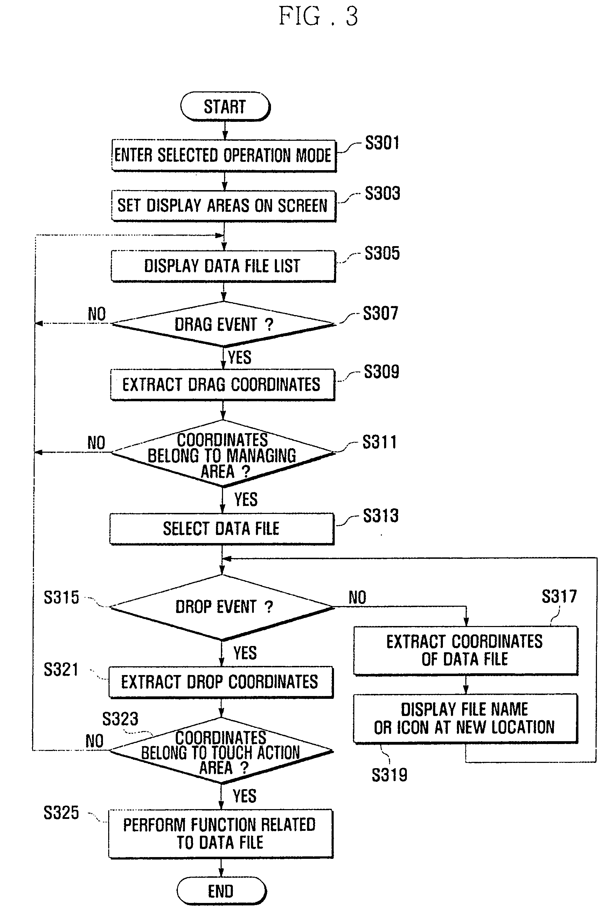

FIG 3 is a flow chart illustrating a user interface providing method using a touch screen according to another exemplary embodiment of the present invention.

Referring to FIG. 3, the control unit 160 enters into a selected operation mode (S301). The operation mode can be a music play mode, photograph viewing mode, file viewing mode, or the like. The operation mode may be selected though menus or short-cut keys.

The control unit 160 sets a managing area 10 and a touch action area 20 on the display screen of the display unit 150 (S303). The control unit 160 displays a data file list in the managing area 10 according to the operation mode (S305).

At step S305, if the data file list is a multi-level list, high-level items of the data file list are displayed first. Selection of a high-level item leads to the display of a next-level data file list subordinate to the selected high-level item. This process may be repeated with stepwise enlargement and movement of the managing area 10.

During display of the data file list, the control unit 160 checks whether a drag event has occurred in the display unit 150 (S307). When a drag event has occurred, the control unit 160 extracts the coordinates of the location at which the drag event has occurred (S309).

The control unit 160 checks whether the coordinates belong to the managing area 10 (S311). If the coordinates belong to the managing area 10, the control unit 160 selects a data file corresponding to the coordinates (S313).

After data file selection, the control unit 160 checks whether a drop event indicating the end of touching has occurred (S315). When a drop event has not occurred, the control unit 160 continues dragging the selected data file by repeating extraction of coordinates of the name or icon of the selected data file (S317) and display of the name or icon at newly extracted coordinates (S319).

When a drop event, indicating the end of touching, has occurred, the control unit 160 extracts coordinates of the location at which the drop event has occurred (S321). The control unit 160 checks whether the coordinates belong to the touch action area 20 (S323). When the coordinates belong to the touch action area 20, the control unit 160 performs a function related to the selected data file (S325). For example, if the selected data file is a music file, the control unit 160 plays the selected data file using a music player.

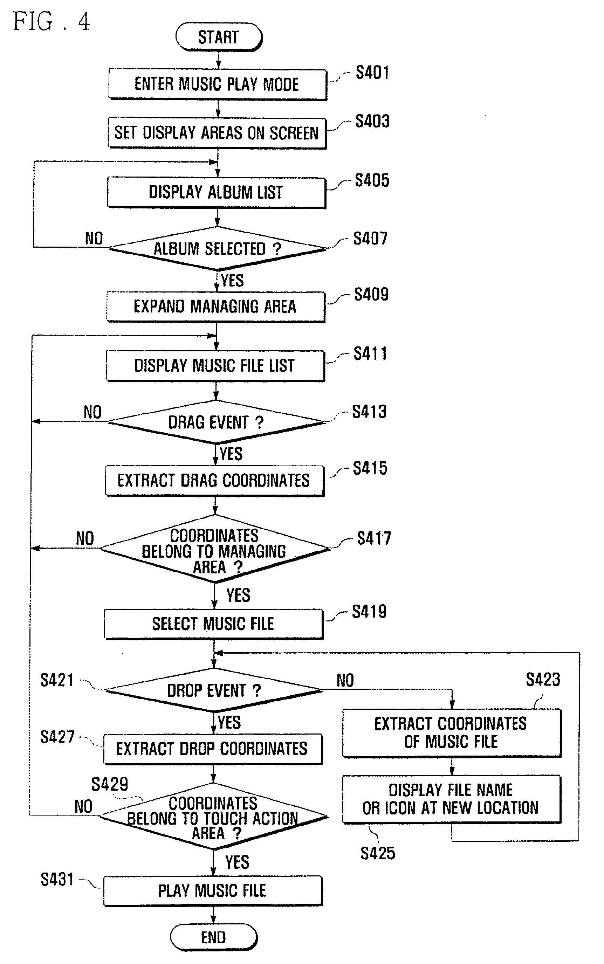

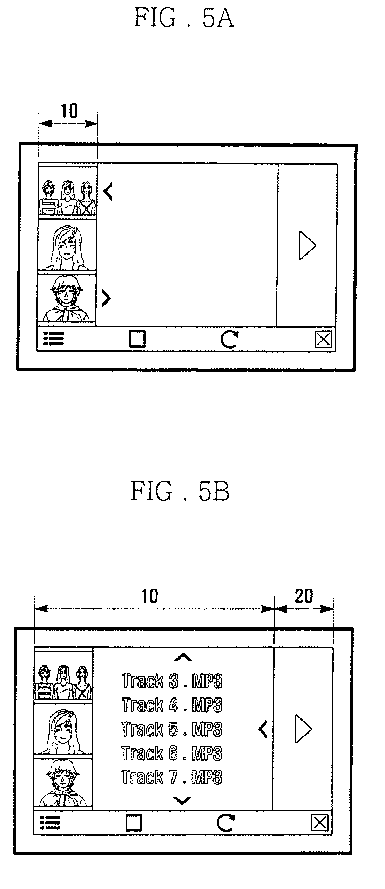

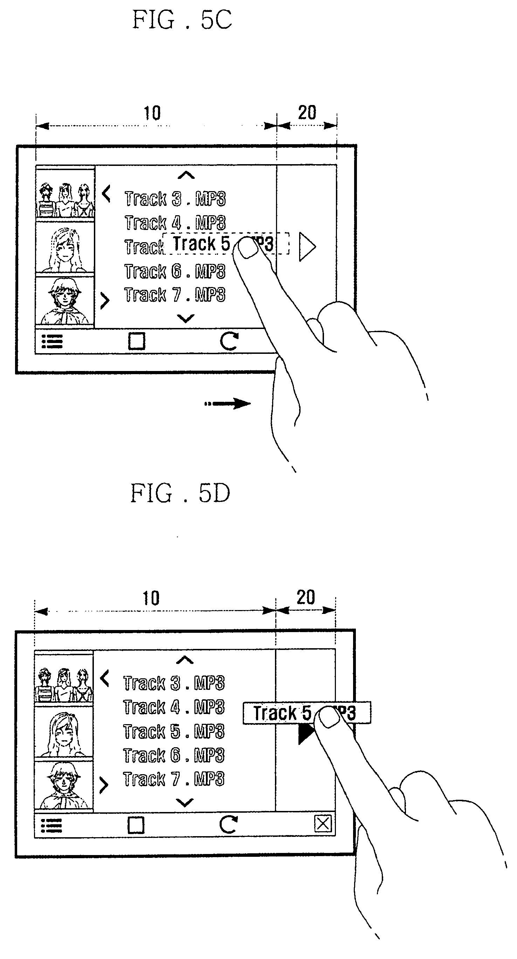

FIG 4 is a flow chart illustrating an example of the user interface providing method of FIG. 3 in a music play mode. FIGS. 5A to 5D are screen representations for the flow chart in FIG. 4.

Referring to FIG 4, the control unit 160 enters into a music play mode according to a user selection (S401). The control unit 160 sets a managing area 10 and a touch action area 20 on the display screen of the display unit 150 (S403).

The control unit 160 displays an album list in the managing area 10 as illustrated in FIG. 5A (S405). In FIG 5A, albums in the album list are represented by their album jacket images. The user may select an album in the album list.

When an album is selected by the user (S407), the control unit 160 expands the managing area 10 (S409), and displays a music file list of the selected album in the expanded managing area 10, as illustrated in FIG 5B (S411). The music file list may contain titles or icons of music files.

During display of the music file list, the control unit 160 checks whether a drag event has occurred in the display unit 150 (S413). When a drag event has occurred, the control unit 160 extracts coordinates of the location at which the drag event has occurred (S415).

The control unit 160 checks whether the coordinates belong to the managing area 10 (S417). When the coordinates belong to the managing area 10, the control unit 160 selects a music file corresponding to the coordinates (S419).

After the music file is selected, the control unit 160 checks whether a drop event, indicating the end of touching, has occurred (S421). If a drop event has not occurred, the control unit 160 continues dragging the selected music file, as illustrated in FIG 5C, by the repeated extraction of coordinates of the name or icon of the selected music file (S423) and the display of the name or icon at the newly extracted coordinates (S425).

When a drop event, indicating the end of touching, has occurred, the control unit 160 extracts the coordinates of the location at which the drop event has occurred (S427). The control unit 160 checks whether the coordinates belong to the touch action area 20 (S429). If the coordinates belong to the touch action area 20, the control unit 160 plays the selected music file (S431).

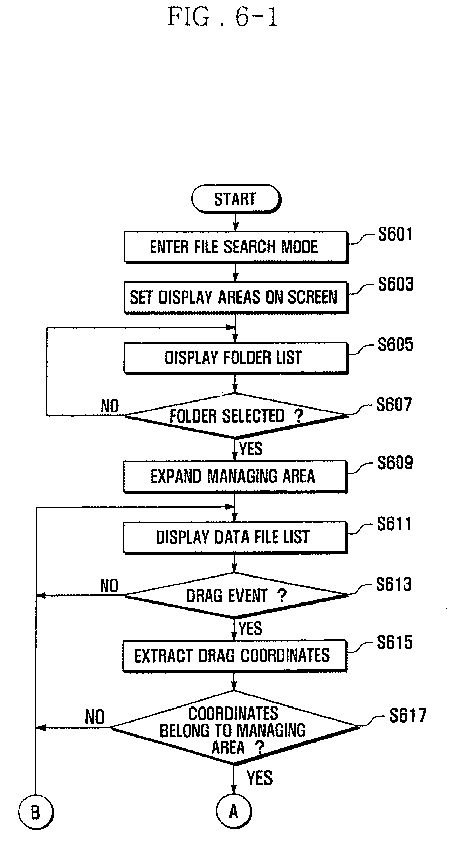

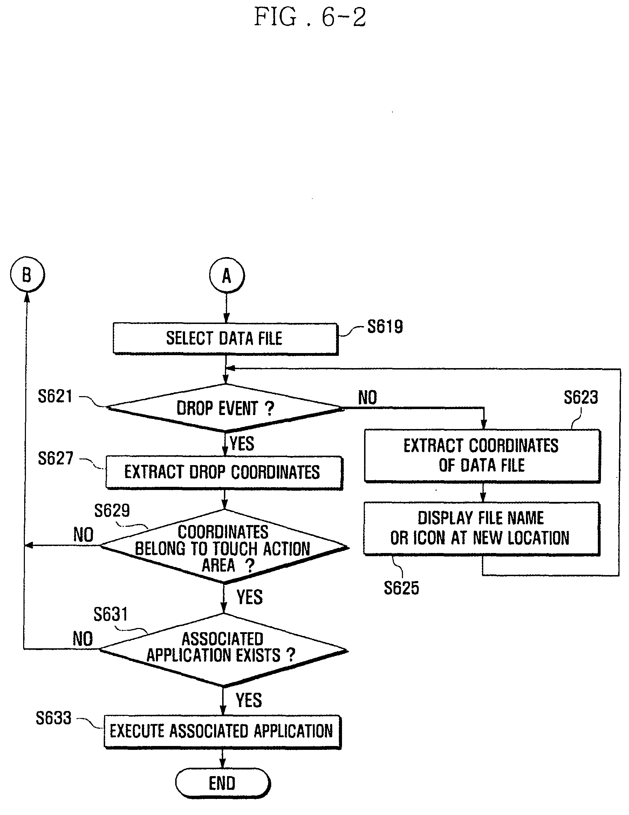

FIG 6 is a flow chart illustrating another example of the user interface providing method of FIG. 3.

Referring to FIG. 6, the control unit 160 enters into a file search mode according to a user selection (S601). The control unit 160 sets a managing area 10 and a touch action area 20 on the display screen of the display unit 150 (S603).

The control unit 160 displays a folder list in the managing area 10 (S605). When a folder in the folder list is selected by the user (S607), the control unit 160 expands the managing area 10 (S609), and displays a data file list of the selected folder in the expanded managing area 10 (S611).

During display of the data file list, the control unit 160 checks whether a drag event has occurred in the display unit 150 (S613). If a drag event has occurred, the control unit 160 extracts the coordinates of the location at which the drag event has occurred (S615).

The control unit 160 checks whether the coordinates belong to the managing area 10 (S617). When the coordinates are determined to belong to the managing area 10, the control unit 160 selects a data file corresponding to the coordinates (S619).

After data file selection, the control unit 160 checks whether a drop event, indicating the end of touching, has occurred (S621). If a drop event has not occurred, the control unit 160 continues dragging the selected data file by the repeated extraction of coordinates of the name or icon of the selected data file (S623) and displays the name or icon at the newly extracted coordinates (S625).

If a drop event, indicating the end of touching, has occurred, the control unit 160 extracts the coordinates of the location at which the drop event has occurred (S627). The control unit 160 checks whether the coordinates belong to the touch action area 20 (S629). If the coordinates belong to the touch action area 20, the control unit 160 determines whether an application associated with the selected data file is present (S631). If an associated application is present, the control unit 160 executes the associated application (S633).

At step S631, the control unit 160 can determine the presence of an application associated with a data file through examination of the extension of the filename of the selected data file. For example, an image file may have a filename extension such as 'jpg', 'bmp', 'gif' or 'png'. For an image data file, the control unit 160 executes a file viewer application to display the data file. A text file may have a filename extension such as 'txt', 'hwp' or 'gul'. For a text data file, the control unit 160 executes a text file editor application to display the data file. A music file may have a filename extension such as 'mp3'. For a music data file, the control unit 160 executes a music player application to play the data file. A video file may have a filename extension such as 'avi' and 'mpg'. For a video data file, the control unit 160 executes a video player application to play the data file.

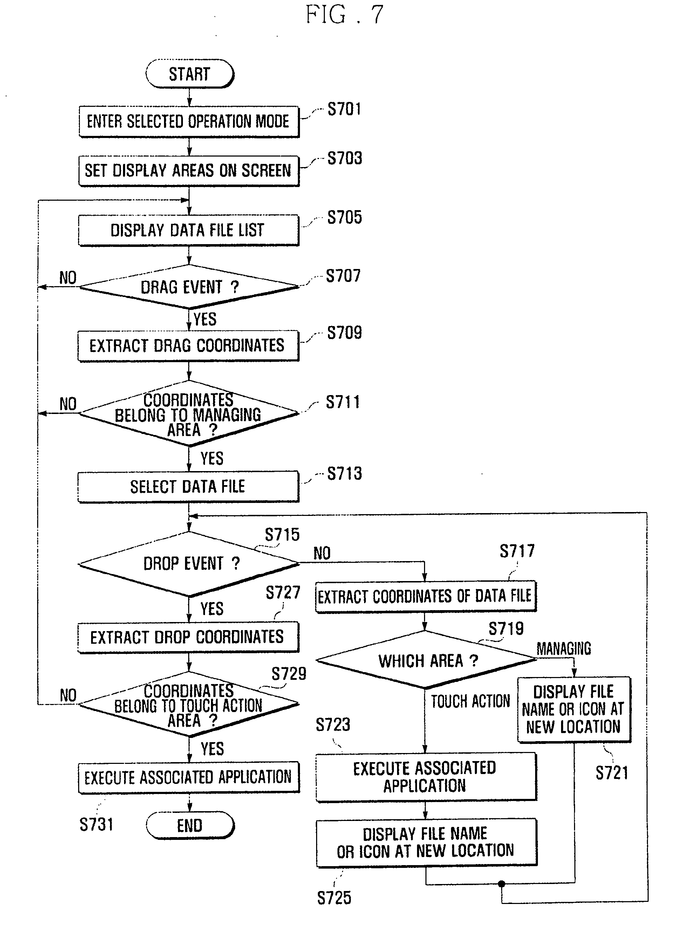

FIG 7 is a flow chart illustrating another example of the user interface providing method of FIG. 3. In FIG 7, a preview or pre-listening function is provided through a drag operation.

Referring to FIG. 7, the control unit 160 enters into a selected operation mode (S701). The control unit 160 sets a managing area 10 and a touch action area 20 on the display screen of the display unit 150 (S703).

The control unit 160 displays a data file list in the managing area 10 (S705). During the display of the data file list, the control unit 160 checks whether a drag event has occurred in the display unit 150 (S707).

If a drag event has occurred, the control unit 160 extracts the coordinates of the location at which the drag event has occurred (S709). The control unit 160 checks whether the coordinates belong to the managing area 10 (S711).

If the coordinates belong to the managing area 10, the control unit 160 selects a data file corresponding to the coordinates (S713). After the selection of the data file, the control unit 160 checks whether a drop event indicating the end of touching has occurred (S715).

If a drop event has not occurred, the control unit 160 extracts the coordinates of the name or icon of the selected data file (S717), and determines whether the coordinates belong to either the managing area 10 or the touch action area 20 (S719).

If the coordinates belong to the managing area 10, the control unit 160 re-displays the name or icon at the coordinates to represent movement of the selected data file (S721). If the coordinates belong to the touch action area 20, the control unit 160 executes an application associated with the selected data file (S723), and re-displays the name or icon at the coordinates to represent movement of the selected data file (S725).

Application execution at step S723 may be used to implement a preview or pre-listening function. As an example of pre-listening, when a music file is dragged to the touch action area 20, it is played. Hence, after listening to a portion of the song, the user can decide whether to continue playing of the music file. The user can drag/drop the music file into the touch action area 20 to continue playing of the music file or drag/drop the music file into the managing area 10 to stop playing of the music file.

Further, as an example of previewing, when an unknown image file is dragged to the touch action area 20, it is displayed. Hence, the user can view the dragged image file. This preview or pre-listening function may also be applied to other kinds of data files.

If a drop event, indicating the end of touching, has occurred at step S715, the control unit 160 extracts coordinates of the location at which the drop event has occurred (S727). The control unit 160 checks whether the coordinates belong to the touch action area 20 (S729). If the coordinates belong to the touch action area 20, the control unit 160 executes an application associated with the selected data file (S731). For example, if the selected data file is a music file, a corresponding music file player is executed.

The present invention provides a user interface providing method for a mobile terminal having a touch screen, wherein selection of a data file and execution of an associated application are performed through intuitive drag and drop actions using a data selection area and an execution area set on a single screen. The user interface providing method also provides a preview or pre-listening function. As a result, convenience and effectiveness of a mobile terminal can be improved.

The above-described methods according to the present invention can be realized in hardware or as software or computer code that can be stored in a recording medium such as a CD ROM, an RAM, a floppy disk, a hard disk, or a magneto-optical disk or downloaded over a network, so that the methods described herein can be executed by such software using a general purpose computer, or a special processor or in programmable or dedicated hardware, such as an ASIC or FPGA. As would be understood in the art, the computer, the processor or the programmable hardware include memory components, e.g., RAM, ROM, Flash, etc. that may store or receive software or computer code that when accessed and executed by the computer, processor or hardware implement the processing methods described herein.

While exemplary embodiments of the present invention have been shown and described in this specification, it will be understood by those skilled in the art that various changes or modifications of the embodiments are possible without departing from the spirit and scope of the invention as defined by the appended claims.

## Claims

1. A user interface providing method for a mobile terminal having a touch screen, comprising:
displaying a data file list on the touch screen;
selecting, in response to a drag event, a data file in the data file list;
detecting events occurring to the selected data file; and
playing, when a drop event has occurred to the selected data file, the selected data file.

2. The user interface providing method of claim 1, wherein playing the selected data file comprises:
extracting coordinates of a location at which the drop event has occurred; and
playing the selected data file when the extracted coordinates belong to a touch action area.

3. The user interface providing method of claim 2, wherein playing the selected data file comprises
preventing playing of the selected data file when the extracted coordinates do not belong to the touch action area.

4. The user interface providing method of claim 1, further comprising:
extracting coordinates of a file indicator of the selected data file when a drop event has not occurred to the selected data file,; and
playing the selected data file when the extracted coordinates of the file indicator belong to a touch action area.

5. The user interface providing method of claim 4, further comprising
redisplaying the file indicator at the extracted coordinates to represent movement of the selected data file when a drop event has not occurred to the selected data file.

6. The user interface providing method of claim 5, wherein the file indicator is a name or icon of the selected data file.

7. The user interface providing method of claim 1, wherein the displaying a data file list comprises:
setting a managing area and a touch action area on the touch screen; and
displaying the data file list in the managing area.

8. The user interface providing method of claim 7, wherein the managing area is used to display a list of data files and the touch action area is used to play a data file that is dragged from the managing area and is dropped into the touch action area.

9. The user interface providing method of claim 7, wherein the managing area comprises a folder zone and a file zone.

10. The user interface providing method of claim 9, wherein the folder zone is used to display a folder list and the file zone is used to display a file list subordinate to a selected folder of the folder list with expansion of the managing area.

11. The user interface providing method of claim 1, wherein the data file is one of a music file, text file, image file, and video file.

12. A user interface providing method for a mobile terminal having a touch screen, comprising:
displaying a data file list on the touch screen;
selecting, in response to a drag event, a data file in the data file list;
detecting events occurring to the selected data file; and
executing an application associated with the selected data file when a drop event has occurred to the selected data file.

13. The user interface providing method of claim 12 wherein the executing an application comprises:
extracting coordinates of a location at which the drop event has occurred;
checking the presence of an application associated with the selected data file when the extracted coordinates belong to a touch action area; and
executing, if an application associated with the selected data file is present, the application.

14. The user interface providing method of claim 13, wherein the executing an application comprises
redisplaying the data file list when an application associated with the selected data file is not present.

15. The user interface providing method of claim 13, wherein checking the presence of an application comprises
determining whether an application supporting a filename extension of the selected data file is present in the mobile terminal.

16. The user interface providing method of claim 13, further comprising:
extracting coordinates of a location at which the drop event has occurred; and
redisplaying the data file list when the extracted coordinates do not belong to the touch action area.

17. The user interface providing method of claim 12, further comprising:
extracting coordinates of a file indicator of the selected data file when a drop event has not occurred to the selected data file;
checking the presence of an application associated with the selected data file when the extracted coordinates belong to a touch action area; and
executing the application when an application associated with the selected data file is present.

18. The user interface providing method of claim 17, further comprising
redisplaying the file indicator at the extracted coordinates to represent movement of the selected data file when a drop event has not occurred to the selected data file.

19. The user interface providing method of claim 18, wherein the file indicator is a name or icon of the selected data file.

20. The user interface providing method of claim 12, wherein the application is one of an image viewer, music player, video player, and file viewer.

21. The user interface providing method of claim 12, wherein the displaying a data file list comprises:
setting a managing area and a touch action area on the touch screen; and
displaying the data file list in the managing area.

22. The user interface providing method of claim 21, wherein the managing area comprises a folder zone and a file zone.

23. The user interface providing method of claim 22, wherein the folder zone is used to display a folder list and the file zone is used to display a file list subordinate to a selected folder of the folder list with expansion of the managing area.

24. The user interface providing method of claim 21, wherein the managing area is used to display data files and the touch action area is used to play a data file that is dragged and dropped into the touch action area.

25. An apparatus for controlling the operation of a mobile terminal having a touch screen, comprising:
a processor in communication with a memory, the memory including software instruction which when accessed by the processor causes the processor to execute the steps of
displaying a data file list on the touch screen;
selecting, in response to a drag event, a data file in the data file list;
detecting events occurring to the selected data file; and
executing the selected data file when a drop event has occurred.
